# EUROPÄISCHE PATENTSCHRIFT

(11) **EP 3 880 750 B1**
(45) Veröffentlichungstag und Bekanntmachung des Hinweises auf die Patenterteilung: **04.01.2023**
(21) Anmeldenummer: 19806132.7
(22) Anmeldetag: 13.11.2019
(51) Int. Cl.: C08L 33/08, C08L 33/10, C09J 133/08, C09J 133/10

(54) **VERPACKTE VISKOELASTISCHE POLYMERMASSE**
PACKAGED VISCOELASTIC POLYMER SUBSTANCE
MATIÈRE POLYMÈRE VISCOÉLASTIQUE EMBALLÉE

(30) Priorität: 13.11.2018 DE 102018219357
(43) Veröffentlichungstag der Anmeldung: 22.09.2021
(73) Patentinhaber: tesa SE, 22848 Norderstedt (DE)
(72) Erfinder: MASSOW, Klaus, 22393 Hamburg (DE); LASS, Volker, 22941 Bargteheide (DE); BRANDES, Kay, 21259 Otter (DE)
(74) Vertreter: tesa SE
(86) Internationale Anmeldenummer: PCT/EP2019/081138
(87) Internationale Veröffentlichungsnummer: WO 2020/099467

(56) Entgegenhaltungen:
- WO-A1-01/46019
- DE-U- 9 116 662
- US-A- 5 373 682
- US-A1- 2014 356 562

## Beschreibung

Die vorliegende Erfindung betrifft ein Verfahren zur Herstellung einer verpackten viskoelastischen Polymermasse. Die vorliegende Erfindung betrifft ferner eine verpackte viskoelastische Polymermasse, die nach dem hierin beschriebenen Verfahren erhältlich ist, sowie die Verwendung der verpackten viskoelastischen Polymermasse zur weiteren Verarbeitung unter Einfluss von Wärme und Scherung.

Viskoelastische Polymermassen sind bekannt und werden häufig zur Herstellung von Klebmassen verwendet. Entsprechende Klebmassen enthalten beispielsweise Polyacrylat-Polymere, die häufig über Polymerisationsverfahren in Lösung hergestellt werden. Geschieht die Polymerisation solcher Basispolymere in einem Lösungsmittel, so wird das Polymerisat nach der Polymerherstellung durch Entfernen des Lösungsmittels aufkonzentriert. Anschließend werden dem Polymer weitere Bestandteile hinzugefügt, die zur Herstellung der Klebmasse benötigt werden. Je nachdem, welche Klebeigenschaften eingestellt werden sollen, können sowohl die Eigenschaften des Basispolymers als auch die einzelnen Bestandteile der fertigen Klebmasse stark variieren. Um die weitere Verarbeitung entsprechender Polymermassen so flexibel wie möglich zu gestalten und beispielsweise größere Mengen Basispolymer, Klebmassevorläufer oder auch die Klebmasse selbst zu lagern, müssen entsprechende Polymermassen verpackt werden.

Es besteht daher ein Bedarf an der Bereitstellung von viskoelastischen Polymermassen in lagerfähiger Form, die bei Bedarf auch in großtechnischen Verfahren zur weiteren Verarbeitung zur Verfügung gestellt werden können.

EP3004272B1 widmet sich der Bereitstellung verpackter Klebstoffe in unterschiedlicher Form, beispielsweise Kissen, und beschreibt verpackte druckempfindliche Haftschmelzkleber umfassend eine druckempfindliche Haftschmelzkleberzusammensetzung und eine Koextrusionsbeschichtung bestehend aus reinem Polyethylen, reinem Polypropylen oder reinem Ethylenvinylacetat mit speziellem Schmelzflussindex. Gemäß Stand der Technik kann die Herstellung einer selbstklebenden Polymermasse mittels Koextrusion von Kleber und Schutzpolymer erfolgen, bevor das umhüllte Polymer anschließend in Portionen vereinzelt wird. Viskoelastische Polymere mit hohen Molekulargewichten, die sich zur Herstellung von Selbsthaftklebemassen eignen, konnten bisher aber nicht verlässlich mit einem derartigen Schutzpolymer umhüllt werden. Zum einen führten die dafür notwendigen Verarbeitungstemperaturen zu einer Zerstörung des Schutzpolymers, zum anderen kommt es bei dem Vereinzelungsschritt zu einem erhöhten inneren Druck im viskoelastischen Polymer, der sich während der nachfolgenden Lagerzeit abbaut und der zu einem Öffnen der Schutzpolymerhülle an den Nähten führt. Im Ergebnis kommt es zu einem unerwünschten Austritt des viskoelastischen Polymers.

Dieser Gefahr könnte durch größere Schutzpolymermengen begegnet werden. Um die Eigenschaften der viskoelastischen Polymere möglichst wenig zu beeinflussen, sollte der Anteil an nichtklebendem Schutzpolymer aber möglichst gering sein. Geringere Anteile an Schutzpolymer resultieren in der beschriebenen Anfälligkeit gegen äußere mechanische und thermische Belastungen. Es gilt daher, ein ausgewogenes Verhältnis zwischen Schutzwirkung und Einfluss auf die Eigenschaften des Schmelzhaftklebers zu finden.

Viskoelastische Polymere mit hohen Molekulargewichten benötigen hohe Verarbeitungstemperaturen, um sie in einen fließfähigen Zustand zu bringen. Hohe Verarbeitungstemperaturen bergen die Gefahr, dass das nichtklebende Schutzpolymer schmilzt oder so beschädigt wird, dass das viskoelastische Polymer austritt und eine Weiterverarbeitung nicht mehr möglich ist. Da die Schutzpolymere beim Wideraufschmelzen nicht entfernt werden, sondern zusammen mit dem viskoelastischen Polymer in eine plastifizierte Form gebracht werden, können keine Schutzpolymere mit höheren Erweichungs- oder Schmelzpunkten verwendet werden, da dies entweder eine möglicherweise unzulässig hohe Weiterverarbeitungstemperatur zur Folge hätte oder Reste von nichtaufgeschmolzenem Schutzpolymer in der viskoelastischen Klebermatrix verbleiben würden. Beides könnte unerwünschte Folgen für die spätere Verwendung als Selbstklebemasse haben.

Gerade für große Mengen verpackter Klebstoffe und Klebstoffvorläufer, die bei Raumtemperatur nur schwer verpackt werden können und auch bei erhöhten Temperaturen noch hohe Viskositäten von 100 Pas oder mehr aufweisen, besteht aber weiterhin Verbesserungsbedarf. Insbesondere fehlt es bislang an geeigneten Verfahren, die eine einfache und effiziente Herstellung großer Mengen verpackter viskoelastischer Polymermassen erlauben. Ein wesentliches Problem hierbei ist, dass die Polymermassen zum Verpacken erwärmt und plastifiziert werden müssen. Da große Mengen der Polymermassen mehr Wärme speichern als kleine Mengen Polymermasse, ist ein limitierender Faktor bei der Herstellung verpackter Polymermassen in großem Maßstab bisher die Abführung der thermischen Energie, die zuvor zur besseren Verarbeitung in die Polymermassen gesteckt wurde. Mit anderen Worten muss die Energie, mit deren Hilfe die Polymermassen vor dem Verpacken zur bessern Plastifizierung erwärmt wurden, wieder abgeführt werden.

Daraus lässt sich ableiten, dass im Falle großer Mengen verpackter viskoelastischer Polymermassen ein Kompromiss notwendig war. Dieser Kompromiss bestand in einem hohen Zeitaufwand bei der Abkühlung großer Mengen Polymermasse. Oder es mussten viele Einzelpackungen erzeugt werden, deren Inhalt sich schnell kühlen ließ. Dieser Ansatz ist jedoch problematisch, weil gerade im Falle vieler kleiner Einzelpackungen die Gefahr besteht, dass sich die Schutzhülle einiger weniger Päckchen öffnet, wodurch es zu einem Verblocken und Verkleben mit anderen Päckchen kommen kann.

Es besteht also weiterhin ein Bedarf an effizienten und schnellen Verfahren zur Bereitstellung großer Mengen verpackter viskoelastischer Polymermassen. Insbesondere besteht ein Bedarf an effizienten und schnellen Verfahren zur Bereitstellung großer Mengen verpackter Basispolymere, die im Wesentlichen aus Poly(meth)acrylaten bestehen und als Schmelzhaftkleber Verwendung finden können. Entsprechende Basispolymere werden zuerst in Lösemitteln, vorzugsweise mit dem Verfahren der freien radikalischen Polymerisation hergestellt und anschließend in einem Aufkonzentrationsprozess unter dem Einfluss von Wärme und Vakuum von den Lösemitteln befreit. Sofern sich die so hergestellten Basispolymere noch nicht als selbstklebende Schmelzhaftklebemassen eignen, werden diese Basispolymere in einem oder mehreren nachfolgenden Schritten mit weiteren Additiven wie klebrigmachenden Harze, Füllstoffen, Weichmachern, Vernetzern usw. abgemischt werden. Diese sogenannte Compoundierung der Basispolymere erfolgt vorzugsweise kontinuierlich in Doppelschneckenextrudern oder auch in Planetwalzenextrudern.

Ein weiterer Bedarf besteht in der Bereitstellung eines Verfahrens, welches es ermöglicht, die viskoelastischen Polymermassen, insbesondere die Basispolymere, auch an Orten verarbeiten zu können, an denen sich keine Anlagen für deren Polymerisation oder Aufkonzentration befinden. Es galt also eine Vorgehensweise zu finden, mit der sich die viskoelastischen Basispolymere transportieren und am bestimmungsmäßigen Ort zu Schmelzhaftklebemassen abmischen lassen.

Ein bekannter und häufig genutzter Ansatz zur Lagerung und zum Transport von schmelzbaren Polymeren, wie beispielsweise Heißschmelzklebern, beinhaltet das Abfüllen in Glattwandfässer, in denen die Polymere nach ihrer Lagerung und ihrem Transport mit Hilfe von sogenannten Fassschmelzern zunächst erwärmt werden, um die Fließfähigkeit der Polymermasse zu erhöhen, bevor die Polymermasse dem weiteren Prozess zugeführt wird. Diese Form der Ablage ist bei viskoelastischen Basispolymeren mit hoher Viskosität nur unter extrem aufwändigen Bedingungen möglich, da auf Grund der hohen Viskositäten nur geringe Schmelzströme erreicht werden, wodurch der Produktionsprozess unwirtschaftlich wird.

Vor diesem Hintergrund stellt sich die vorliegende Erfindung die Aufgabe, ein Verfahren zur Herstellung einer verpackten viskoelastischen Polymermasse bereitzustellen, die in großen Mengen transport- und lagerfähig ist, wobei das Verfahren mit verringertem Zeitaufwand bewältigt werden kann, und ein Verkleben und Verblocken von Einzelpackungen vermieden wird.

Die vorliegende Erfindung löst diese Aufgabe durch ein Verfahren zur Herstellung einer verpackten viskoelastischen Polymermasse, das die folgenden Schritte umfasst:
a) Bereitstellen und Plastifizieren einer viskoelastischen Polymermasse bei erhöhten Temperaturen, wobei die Polymermasse eine Polymermasse auf Basis von Poly(meth)acrylaten mit einem gewichtsmittleren Molekulargewicht von 500.000 g/mol oder mehr ist;
b) kontinuierliches Abfüllen der plastifizierten viskoelastischen Polymermasse in eine Schutzpolymerfolie, die keine selbstklebenden Eigenschaften aufweist und die vor Befüllen mit der viskoelastischen Polymermasse in eine Schlauchform gebracht wurde, unter Erhalt eines strangförmigen Polymerverbunds mit einem Durchmesser von 55 bis 70 mm umfassend einen Kern aus der plastifizierten viskoelastischen Polymermasse und eine Hülle aus der Schutzpolymerfolie, wobei der Anteil der Schutzpolymerfolie bezogen auf das Gesamtgewicht aus Schutzpolymerfolie und viskoelastischer Polymermasse weniger als 1,0 Gew.-% beträgt, und wobei die plastifizierte viskoelastische Polymermasse zum Zeitpunkt des Abfüllens in die schlauchförmige Schutzpolymerfolie eine Viskosität von mehr als 100 Pas aufweist;
c) Überführen des strangförmigen Polymerverbunds in einen abgeflachten strangförmigen Polymerverbund, dessen kleinster Querschnitt ein Verhältnis von Breite zu Höhe von etwa 2:1 bis 7:1, bevorzugt von etwa 3:1 bis 5:1 aufweist;
d) Abkühlen des abgeflachten strangförmigen Polymerverbundes auf eine Temperatur, bei der der Polymerverbund weiterhin plastisch verformbar ist;
e) und anschließendes Aufwickeln des abgeflachten strangförmigen Polymerverbundes auf eine Spule, wobei der auf der Spule aufgewickelte strangförmige Polymerverbund eine Länge von mehr als 30 Metern, vorzugsweise eine Länge von mehr als 50 Metern und besonders bevorzugt eine Länge von mehr als 100 Metern aufweist.

Im erfindungsgemäßen Verfahren wird der Verbund aus viskoelastischem Polymer und Schutzpolymer also vor Eintritt in das Kühlbad abgeflacht, bevorzugt mittels Walzen, um ein schnelleres Abkühlen des viskoelastischen Polymers und damit eine thermische Schonung des Schutzpolymers zu erzielen.

Darüber hinaus betrifft die vorliegende Erfindung verpackte viskoelastische Polymermassen, die nach dem hierin beschriebenen Verfahren erhältlich sind, sowie die Verwendung und den Einsatz der verpackten viskoelastischen Polymermasse wie hierin beschrieben in einer weiteren Verarbeitung. In einer bevorzugten Ausgestaltung dieser Verwendung wird das mit einem Schutzpolymer ummantelte viskoelastische Basispolymer für die Weiterverarbeitung in einen plastifizierten Zustand gebracht und auf eine Temperatur erwärmt, bei der das Schutzpolymer aufschmilzt und homogen in das viskoelastische Basispolymer eingearbeitet wird.

Gemäß Schritt a) des hierin beschriebenen Verfahrens wird eine viskoelastische Polymermasse bereitgestellt und bei erhöhten Temperaturen plastifiziert, bevor die plastifizierte Polymermasse kontinuierlich in eine Schutzpolymerfolie abgefüllt wird. Die viskoelastische Polymermasse ist eine Polymermasse auf Basis von Poly(meth)acrylat mit einem gewichtsmittleren Molekulargewicht von 500.000 g/mol oder mehr und besitzt zum Zeitpunkt des Abfüllens in die schlauchförmige Schutzpolymerfolie eine Viskosität von mehr als 100 Pas.

Unter "Plastifizieren" im Sinne der vorliegenden Erfindung wird das Erzielen eines Zustands verstanden, bei dem die viskoelastische Polymermasse verformbar, bevorzugt fließfähig ist. Dabei weist die Polymermasse bei den zur Plastifizierung eingesetzten erhöhten Temperaturen eine bessere Verformbarkeit, das heißt eine erhöhte Fließfähigkeit auf, als dies im Falle nicht erhöhter Temperaturen der Fall ist. Bevorzugt wird das Plastifizieren der viskoelastischen Polymermasse bei erhöhten Temperaturen in einem Extruder durchgeführt.

Die viskoelastische Polymermasse weist ferner zum Zeitpunkt des Abfüllens in die schlauchförmige Form eine Viskosität von mehr als 100 Pas auf. Die Viskosität wird bestimmt mittels eines ARES Rheometers der Firma Rheometric Scientific Incorporation (luftgelagert) (Geometry Type = Parallel Plates; Diameter = 25.0 [mm]; Test Type = Rate Sweep; Temperature = 100; 120; 140; 160; 180 [°C]; Sweep Mode = Log; Initial Rate = 0.1 [1/s]; Final Rate = 100.0 [1/s]; Points Per Decade = [6]).

In Schritt b) des hierin beschriebenen Verfahrens wird die plastifizierte viskoelastische Polymermasse aus Schritt a) kontinuierlich in eine Schutzpolymerfolie abgefüllt. Die Schutzpolymerfolie besteht aus einem Schutzpolymer, das keine selbstklebenden Eigenschaften aufweist. Die Schutzpolymerfolie wird vor dem Befüllen in eine Schlauchform gebracht. Die schlauchförmige Schutzpolymerfolie wird also nicht durch ein Koextrusionsverfahren erhalten, sondern es wird ausgehend von einer herkömmlichen Folie eine Schlauchform erzeugt. Dies ist zum Beispiel möglich, in dem man ausgehend von einer bahnförmigen Folie zwei gegenüberliegende Seitenkanten der Folie derart miteinander verbindet, dass sich ein Schlauch ergibt. Das Verbinden der Seitenkanten kann mittels Hitzeeintrag und Druck erfolgen.

In Schritt b) wird durch das Abfüllen der viskoelastischen Polymermasse in die schlauchförmige Schutzpolymerfolie ein strangförmiger Polymerverbund erhalten, der einen Kern aus der plastifizierten viskoelastischen Polymermasse und eine Hülle aus dem Schutzpolymer umfasst. Erfindungsgemäß beträgt der Anteil des Schutzpolymers bezogen auf das Gesamtgewicht aus Schutzpolymer und viskoelastischer Polymermasse weniger als 1,0 Gewichtsprozent. Gemäß den hierin beschriebenen Schritten a) und b) wird also ein strangförmiger Polymerverbund erzeugt. Dieser strangförmige Polymerverbund hat einen Durchmesser von etwa 55 bis 70 mm, bevorzugt 60 bis 70 mm, wobei der Durchmesser aufgrund der Schlauchform der Schutzpolymerfolie, die in Schritt b) befüllt wird, zunächst kreisförmig ist.

Gemäß Schritt c) wird der strangförmige Polymerverbund sodann in einen abgeflachten strangförmigen Polymerverbund gebracht, dessen kleinster Querschnitt ein Verhältnis von Breite zu Höhe von etwa 2:1 bis 7:1, bevorzugt von etwa 3:1 bis 5:1 aufweist. Der Ausdruck kleinster Querschnitt bedeutet in diesem Zusammenhang, dass in einer Ebene senkrecht zur Längsachse des strangförmigen Polymerverbunds gemessen wird. Mit anderen Worten wird nicht auf einen Querschnitt entlang der längsten Ausdehnung des Polymerstrangs abgestellt, sondern es wird die Abweichung von der zunächst kreisförmigen Querschnittsform des strangförmigen Polymerverbunds aus Schritt b) bestimmt. Der kleinste Querschnitt und das Verhältnis von Breite zu Höhe ist Ausdruck für das Ausmaß der Abflachung. Die Abflachung kann erzielt werden, in dem der strangförmige Polymerverbund durch einen Spalt oder Walzen, beispielsweise rotierende Walzen, geführt wird. In einer bevorzugten Ausgestaltung der vorliegenden Erfindung erfolgt die Abflachung mittels Walzen.

Durch das Überführen des strangförmigen Polymerverbunds in einen entsprechend abgeflachten strangförmigen Polymerverbund wird der Wärmeaustausch zwischen dem strangförmigen Polymerverbund und der Umgebung stark verbessert, so dass Schritt d), d.h. das Abkühlen des strangförmigen Polymerverbundes (im Vergleich zu einer nicht abgeflachten, im Wesentlichen kreisförmigen Querschnittsform) deutlich schneller durchführbar ist. In Schritt d) wird der in Schritt c) erhaltene abgeflachte strangförmige Polymerverbund auf eine Temperatur abgekühlt, bei der der Polyverbund weiterhin plastisch verformbar ist. Zur Abkühlung kann der strangförmige Polymerverbund beispielsweise durch ein Wasserbad geführt werden, das als Abkühlstrecke verwendet wird. Am Ende von Schritt d) beträgt die Kerntemperatur des abgeflachten strangförmigen Polymerverbunds bevorzugt weniger als 100 Grad Celsius, bevorzugt weniger als 90 Grad C, besonders bevorzugt weniger als 80 Grad C. Unter dem Begriff der Kerntemperatur versteht die vorliegende Erfindung die Temperatur in der Querschnittsmitte des strangförmigen Polymerverbunds.

In Schritt e) des hierin beschriebenen Verfahrens wird der strangförmige Polymerverbund anschließend auf eine Spule aufgewickelt, wobei der auf der Spule aufgewickelte, strangförmige Polymerverbund (im abgewickelten Zustand) eine Länge von mehr als 30 Metern, bevorzugt mehr als 50 Metern, besonders bevorzugt mehr als 100 Metern aufweist.

In einem besonders bevorzugten Verfahren gemäß der vorliegenden Erfindung wird der strangförmige Polymerverbund, der in Schritt d) erhalten wird, zu Beginn von Schritt e) zunächst durch eine Öffnung in der Stirnseite der Spule eingeführt und dort fixiert. Hiermit wird sichergestellt, dass der strangförmige Polymerverbund im Bereich des zunächst auf die Spule aufgewickelten Endes nicht verrutscht und keine Polymermasse aus der Schutzpolymerhülle austritt.

Besonders vorteilhafte Ausgestaltungen des hierin beschriebenen erfindungsgemäßen Verfahrens verwenden eine viskoelastische Polymermasse, die beim Überführen in die strangförmige Form eine Viskosität von mehr als 250 Pas, bevorzugt eine Viskosität von mehr als 500 Pas aufweist.

Die erfindungsgemäß verwendete Schutzpolymerfolie umfasst bevorzugt Polyethylen, Polypropylen, Ethylenvinylacetat oder ein Gemisch hiervon. Der Anteil der in Schritt b) verwendeten Schutzpolymerfolie bezogen auf das Gesamtgewicht aus Schutzpolymer und viskoelastischer Polymerasse beträgt besonders bevorzugt weniger als 0,8 Gewichtsprozent, noch bevorzugter weniger als 0,5 Gewichtsprozent, bezogen auf das Gesamtgewicht aus Schutzpolymer und viskoelastischer Polymermasse. Besonders geeignete Anteile des Schutzpolymers bezogen auf das Gesamtgewicht aus Schutzpolymer und viskoelastischer Polymerasse liegen im Bereich von 0.05 bis 1, bevorzugt im Bereich von 0.1 bis 0,8, besonders bevorzugt im Bereich zwischen 0,2 und 0,5, beispielsweise in einem Bereich von 0,25 bis 0,45 Gewichtsprozent.

Gemäß einer weiteren bevorzugten Ausführungsform der vorliegenden Erfindung ist die viskoelastische Polymermasse eine Klebemasse (oder ein Vorläufer hiervon), bevorzugt eine Haftklebmasse (oder ein Vorläufer hiervon). Unter dem Begriff "Vorläufer" versteht die vorliegende Erfindung, dass die viskoelastische Polymermasse zur Herstellung einer Klebmasse verwendet werden kann. Ganz besonders bevorzugt handelt es sich bei der viskoelastischen Polymermasse, die nach dem erfindungsgemäßen Verfahren verpackt wird, um einen Vorläufer einer Klebmasse, idealerweise um ein Basispolymer. Insbesondere wird für die Zwecke der vorliegenden Erfindung unter einem Vorläufer einer Klebmasse bevorzugt der Vorläufer einer Haftklebmasse verstanden. Ein solcher Vorläufer kann das Polymerisat sein, das am Ende der Polymerisation der Polymere vorliegt, die als Basispolymere für die viskoelastische Polymermasse verwendet werden. Ebenfalls vom Begriff des Vorläufers einer Haftklebmasse umfasst werden Mischungen, die nach dem Zusatz verschiedener Additive oder Komponenten zu dem Basispolymer erhalten werden. Der Begriff der Haftklebmasse wie hierin verwendet ist synonym mit dem Begriff der Selbstklebmasse bzw. dem Begriff des Haftklebstoffs.

Unter einer Haftklebmasse bzw. einem Haftklebstoff wird erfindungsgemäß, wie im allgemeinen Sprachgebrauch üblich, ein Stoff verstanden, der zumindest bei Raumtemperatur dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. Im allgemeinen, grundsätzlich jedoch abhängig von der genauen Art des Haftklebstoffs sowie des Substrats, der Temperatur und der Luftfeuchtigkeit, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines höheren Drucks notwendig sein.

Viskoelastische Polymermassen im Sinne der vorliegenden Erfindung sind Polymermassen auf Basis von Poly(meth)acrylaten mit einem gewichtsmittleren Molekulargewicht von 500.000 g/mol.

Unter einem "Poly(meth)acrylat" wird ein Polymer verstanden, welches durch radikalische Polymerisation von Acryl- und/oder Methacrylmonomeren sowie gegebenenfalls weiteren, copolymerisierbaren Monomeren erhältlich ist. Insbesondere wird unter einem "Poly(meth)acrylat" ein Polymer verstanden, dessen Monomerbasis zu mindestens 50 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 30 Gew.-%, bezogen auf die gesamte Monomerbasis des betreffenden Polymers, enthalten sind.

Bevorzugt handelt es sich bei der hierin beschriebenen viskoelastischen Polymermasse um eine Haftklebmasse oder einen Vorläufer hiervon, wobei die Haftklebmasse Poly(meth)acrylat bevorzugt zu insgesamt 40 bis 70 Gew.-%, stärker bevorzugt zu insgesamt 45 bis 60 Gew.-% enthält, jeweils bezogen auf das Gesamtgewicht der Haftklebmasse. Es kann ein (einziges) Poly(meth)acrylat oder mehrere Poly(meth)acrylate enthalten sein.

Die Glasübergangstemperatur des Poly(meth)acrylats der beschriebenen Haftklebmasse beträgt bevorzugt < 0 °C, stärker bevorzugt zwischen -20 und -50 °C. Die Glasübergangstemperatur von Polymeren oder von Polymerblöcken in Blockcopolymeren wird erfindungsgemäß mittels Dynamischer Scanning Kalorimetrie (DSC) bestimmt. Dazu werden ca. 5 mg einer unbehandelten Polymerprobe in ein Aluminiumtiegelchen (Volumen 25 µl) eingewogen und mit einem gelochten Deckel verschlossen. Zur Messung wird ein DSC 204 F1 der Firma Netzsch verwendet. Es wird zwecks Inertisierung unter Stickstoff gearbeitet. Die Probe wird zunächst auf -150 °C abgekühlt, dann mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt.

Bevorzugt enthält das Poly(meth)acrylat der hierin beschriebenen Haftklebmasse zumindest ein anteilig einpolymerisiertes funktionelles, besonders bevorzugt mit Epoxidgruppen unter Ausbildung einer kovalenten Bindung reaktives Monomer. Ganz besonders bevorzugt enthält das anteilig einpolymerisierte funktionelle, besonders bevorzugt mit Epoxidgruppen unter Ausbildung einer kovalenten Bindung reaktive Monomer mindestens eine funktionelle Gruppe ausgewählt aus der Gruppe bestehend aus Carbonsäuregruppen, Sulfonsäuregruppen, Phosphonsäuregruppen, Hydroxygruppen, Säureanhydridgruppen, Epoxidgruppen und Aminogruppen; insbesondere enthält es mindestens eine Carbonsäuregruppe. Äußerst bevorzugt enthält das Poly(meth)acrylat der hierin beschriebenen Haftklebmasse anteilig einpolymerisierte Acrylsäure und/oder Methacrylsäure. All die genannten Gruppen weisen eine Reaktivität mit Epoxidgruppen auf, wodurch das Poly(meth)acrylat vorteilhaft einer thermischen Vernetzung mit eingebrachten Epoxiden zugänglich wird.

Das Poly(meth)acrylat der hierin beschriebenen Haftklebmasse kann bevorzugt auf die folgende Monomerzusammensetzung zurückgeführt werden:
a) mindestens ein Acrylsäureester und/oder Methacrylsäureester der folgenden Formel (1)

   CH₂=C(R^{I})(COOR^{II}) (1),

   worin R^{I} = H oder CH₃ und R" ein Alkylrest mit 4 bis 18 C-Atomen ist;
b) mindestens ein olefinisch ungesättigtes Monomer mit mindestens einer funktionellen Gruppe ausgewählt aus der Gruppe bestehend aus Carbonsäuregruppen, Sulfonsäuregruppen, Phosphonsäuregruppen, Hydroxygruppen, Säureanhydridgruppen, Epoxidgruppen und Aminogruppen;
c) optional weitere Acrylsäureester und/oder Methacrylsäureester und/oder olefinisch ungesättigte Monomere, die mit der Komponente (a) copolymerisierbar sind.

Es ist besonders vorteilhaft, die Monomere der Komponente a) mit einem Anteil von 45 bis 99 Gew.-%, die Monomere der Komponente b) mit einem Anteil von 1 bis 15 Gew.-% und die Monomere der Komponente c) mit einem Anteil von 0 bis 40 Gew.-% zu wählen, wobei die Angaben auf die Monomermischung für das Basispolymer ohne Zusätze eventueller Additive wie Harze etc. bezogen sind.

Die Monomere der Komponente a) sind allgemein weichmachende, eher unpolare Monomere. Besonders bevorzugt ist RII in den Monomeren a) ein Alkylrest mit 4 bis 10 C-Atomen oder 2-Propylheptylacrylat oder 2-Propylheptylmethacrylat. Die Monomere der Formel (1) sind insbesondere ausgewählt aus der Gruppe bestehend aus n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, 2 Ethylhexylacrylat, 2 Ethylhexylmethacrylat, 2-Propylheptylacrylat und 2-Propylheptylmethacrylat.

Die Monomere der Komponente b) sind besonders bevorzugt ausgewählt aus der Gruppe bestehend aus Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, insbesondere 2-Hydroxyethylacrylat, Hydroxypropylacrylat, insbesondere 3-Hydroxypropylacrylat, Hydroxybutylacrylat, insbesondere 4-Hydroxybutylacrylat, Hydroxyhexylacrylat, insbesondere 6-Hydroxyhexylacrylat, Hydroxyethylmethacrylat, insbesondere 2-Hydroxyethylmethacrylat, Hydroxypropylmethacrylat, insbesondere 3-Hydroxypropylmethacrylat, Hydroxybutylmethacrylat, insbesondere 4-Hydroxybutylmethacrylat, Hydroxyhexylmethacrylat, insbesondere 6-Hydroxy-hexylmethacrylat, Allylalkohol, Glycidylacrylat, Glycidylmethacrylat. Beispielhafte Monomere der Komponente c) sind:
Methylacrylat, Ethylacrylat, Propylacrylat, Methylmethacrylat, Ethylmethacrylat, Benzylacrylat, Benzylmethacrylat, sec-Butylacrylat, tert-Butylacrylat, Phenylacrylat, Phenylmethacrylat, Isobornylacrylat, Isobornylmethacrylat, tert-Butylphenylacrylat, tert-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethyl-methacrylat, 2-Butoxyethylacrylat, 3,3,5-Trimethylcyclohexylacrylat, 3,5-Dimethyl-adamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethylacrylat, Dimethylaminoethylmethacrylat, 3-Methoxyacrylsäuremethylester, 3-Methoxybutylacrylat, 2-Phenoxyethylmethacrylat, Butyldiglykolmethacrylat, Ethylenglycolacrylat, Ethylenglycolmonomethylacrylat, Methoxypolyethylenglykolmethacrylat 350, Methoxypolyethylenglykolmethacrylat 500, Propylenglycolmonomethacrylat, Butoxydiethylenglykolmethacrylat, Ethoxytriethylen-glykolmethacrylat, Octafluoropentylacrylat, Octafluoropentylmethacrylat, 2,2,2-Trifluor-ethylmethacrylat, 1,1,1,3,3,3-Hexafluoroisopropylacrylat, 1,1,1,3,3,3-Hexafluoro-isopropylmethacrylat, 2,2,3,3,3-Pentafluoropropylmethacrylat, 2,2,3,4,4,4-Hexafluoro-butylmethacrylat, 2,2,3,3,4,4,4-Heptafluorobutylacrylat, 2,2,3,3,4,4,4-Heptafluoro-butylmethacrylat, 2,2,3,3,4,4,5,5,6,6,7,7,8,8,8-Pentadecafluorooctylmethacrylat, Dimethyl¬aminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid; N,N-Dialkyl-substituierte Amide wie beispielsweise N,N-Dimethylacrylamid und N,N-Dimethylmethacrylamid; N-Benzyl¬acrylamid, N-Isopropylacrylamid, N-tert-Butylacrylamid, N-tert-Octylacrylamid, N-Methylolacrylamid, N-Methylolmethacrylamid, Acrylnitril, Methacrylnitril; Vinylether wie Vinylmethylether, Ethylvinylether, Vinylisobutylether; Vinylester wie Vinylacetat; Vinylhalogenide, Vinylidenhalogenide, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol; Makromonomere wie 2-Polystyrolethylmethacrylat (gewichtsmittleres Molekulargewicht Mw, bestimmt mittels GPC, von 4000 bis 13000 g/mol), Poly(methylmethacrylat)ethylmethacrylat (Mw von 2000 bis 8000 g/mol).

Monomere der Komponente c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-tert-Butylacrylamid und Allylacrylat.

Die Herstellung der Poly(meth)acrylate geschieht bevorzugt durch konventionelle radikalische Polymerisationen oder kontrollierte radikalische Polymerisationen. Die Poly(meth)acrylate können durch Copolymerisation der Monomere unter Verwendung üblicher Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Bevorzugt werden die Poly(meth)acrylate durch Copolymerisation der Monomere in Lösungsmitteln, besonders bevorzugt in Lösungsmitteln mit einem Siedebereich von 50 bis 150 °C, insbesondere von 60 bis 120 °C, unter Verwendung von 0,01 bis 5 Gew.-% an Polymerisationsinitiatoren, insbesondere von 0,1 bis 2 Gew.-% an Polymerisationsinitiatoren, jeweils bezogen auf das Gesamtgewicht der Monomeren, hergestellt.

Prinzipiell eignen sich alle üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat und Benzpinacol. Bevorzugte radikalische Initiatoren sind 2,2'-Azobis(2-methylbutyronitril) (Vazo^{®} 67^{™} der Firma DuPont) oder 2,2'-Azobis(2-methylpropionitril) (2,2'-Azobisisobutyronitril; AIBN; Vazo^{®} 64^{™} der Firma DuPont).

Bevorzugte Lösungsmittel für die Herstellung der Poly(meth)acrylate sind Alkohole wie Methanol, Ethanol, n- und iso-Propanol, n- und iso-Butanol, insbesondere Isopropanol und/oder Isobutanol; Kohlenwasserstoffe wie Toluol und insbesondere Benzine eines Siedebereichs von 60 bis 120 °C; Ketone, insbesondere Aceton, Methylethylketon, Methylisobutylketon; Ester wie Essigsäureethylester sowie Gemische der vorstehend genannten Lösungsmittel. Besonders bevorzugte Lösungsmittel sind Gemische, die Isopropanol in Mengen von 2 bis 15 Gew.-%, insbesondere von 3 bis 10 Gew.-%, jeweils bezogen auf das eingesetzte Lösungsmittelgemisch, enthalten.

Nach der Herstellung der Poly(meth)acrylate (also am Ende der Polymerisation), erfolgt im Falle eines Lösungsmitteleinsatzes eine Aufkonzentration, und das so erzeugte Polymerisat wird im wesentlichen lösemittelfrei als viskoelastische Polymermasse in dem erfindungsgemäßen Verfahren eingesetzt.

Die Aufkonzentration des Polymerisats kann in Abwesenheit weiterer Additive wie Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt. Dies ist aber nur sinnvoll, wenn die Anwesenheit der gewählten Additive dem Verfahren der vorliegenden Erfindung nicht entgegensteht, da erfindungsgemäß eine viskoelastische Polymermasse zunächst bereitgestellt und bei erhöhten Temperaturen plastifiziert wird (Schritt a)), bevor die plastifizierte viskoelastische Polymermasse auf Basis des Poly(meth)acrylats in eine Schutzpolymerfolie gefüllt wird (Schritt b)). Erfindungsgemäß wird also auf den Zusatz von Additiven zu den jeweiligen Verfahrensschritten verzichtet, wenn die Additive nicht vereinbar sind mit den Temperaturen der einzelnen Verfahrensschritte.

Die gewichtsmittleren Molekulargewichte Mw der Poly(meth)acrylate liegen erfindungsgemäß bei 500.000 g/mol und mehr, bevorzugt bei 750.000 g/mol und mehr, besonders bevorzugt bei 1.000.000 g/mol und mehr. Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Die Angaben zu den gewichtsmittleren Molekulargewichten, Mw (und ebenfalls zu dem zahlenmittleren Molekulargewicht, Mn) in dieser Schrift beziehen sich auf die an sich bekannte Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C.

Als Vorsäule wird eine Säule Typ PSS-SDV, 5 µm, 10³ Å, 8,0 mm ^{∗} 50 mm (Angaben hier und im Folgenden in der Reihenfolge: Typ, Partikelgrösse, Porosität, Innendurchmesser ^{∗} Länge; 1 Å = 10⁻¹⁰ m) verwendet. Zur Auftrennung wird eine Kombination der Säulen des Typs PSS-SDV, 5 µm, 10³ Å sowie 10⁵ Å und 10⁶ Å mit jeweils 8,0 mm ^{∗} 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei Poly(meth)acrylaten gegen PMMA-Standards (Polymethylmethacrylat-Kalibrierung) und sonst (Harze, Elastomere) gegen PS-Standards (Polystyrol-Kalibrierung).

Erfindungsgemäß handelt es sich bei der viskoelastischen Polymermasse auf Basis von Poly(meth)acrylaten um eine Polymermasse, die ein oder mehrere Poly(meth)acrylate enthält oder aus einem oder mehreren Poly(meth)acrylaten besteht. Besonders bevorzugte Ausführungsformen der Erfindung betreffen Verfahren, in denen die viskoelastische Polymermasse eine Selbstklebemasse ist oder in eine Selbstklebemasse überführbar ist.

Unter dem Begriff "überführbar" versteht die vorliegende Erfindung beispielsweise Situationen, in denen die viskoelastische Polymermasse durch Modifizierung, z.B. durch Vernetzung, und/oder durch Zugabe von Additiven in die eigentliche Haftklebmasse überführt werden kann. Je nach Grad der notwendigen Vernetzung kann die viskoelastische Polymermasse bereits in Form eines vernetzten Poly(meth)acrylats bereitgestellt werden, oder die abschließende Vernetzung zur Einstellung des gewünschten Vernetzungsgrads wird erst durchgeführt, wenn die verpackte viskoelastische Polymermasse in der hierin beschriebenen Verwendung zur weiteren Verarbeitung unter Einfluss von Wärme und Scherung zum Einsatz kommt.

Besteht Bedarf an Haftklebmassen mit relativ niedrigem Molekulargewicht und guter Scherfestigkeit nach dem Vernetzungsschritt, so kann das Poly(meth)acrylat der hierin beschriebenen Polymermassen eine Polydispersität von beispielsweise PD < 4 und somit eine relativ enge Molekulargewichtsverteilung aufweisen. Zudem ermöglicht die niedrigere Polydispersität eine leichtere Verarbeitung aus der Schmelze, da die Fließviskosität gegenüber einem breiter verteilten Poly(meth)acrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letztere besonders gut geeignet sind. Auch über N-Oxyle lassen sich entsprechende Poly(meth)acrylate herstellen. Ferner lässt sich in vorteilhafter Weise die Atom Transfer Radical Polymerization (ATRP) zur Synthese eng verteilter Poly(meth)acrylate einsetzen, wobei als Initiator bevorzugt monofunktionelle oder difunktionelle sekundäre oder tertiäre Halogenide und zur Abstraktion der Halogenide Cu-, Ni-, Fe-, Pd-, Pt-, Ru-, Os-, Rh-, Co- , Ir-, Ag- oder Au-Komplexe eingesetzt werden. Auch RAFT-Polymerisation ist geeignet.

Die Poly(meth)acrylate der hierin beschriebenen Haftklebmasse sind bevorzugt durch Verknüpfungsreaktionen - insbesondere im Sinne von Additions- oder Substitutionsreaktionen - von in ihnen enthaltenen funktionellen Gruppen mit thermischen Vernetzern vernetzt. Es können alle thermischen Vernetzer verwendet werden, die
- sowohl eine ausreichend lange Verarbeitungszeit gewährleisten, sodass es nicht zu einer Vergelung während des Verarbeitungsprozesses, insbesondere des Extrusionsprozesses, kommt,
- als auch zu einer schnellen Nachvernetzung des Polymers auf den gewünschten Vernetzungsgrad bei niedrigeren Temperaturen als der Verarbeitungstemperatur, insbesondere bei Raumtemperatur, führen.

Möglich ist beispielsweise eine Kombination aus Carboxy-, Amino- und/oder Hydroxygruppen enthaltenden Polymeren und Isocyanaten, insbesondere aliphatischen oder blockierten Isocyanaten, beispielsweise mit Aminen deaktivierten trimerisierten Isocyanaten, als Vernetzer. Geeignete Isocyanate sind insbesondere trimerisierte Derivate von MDI [4,4-Methylen¬di(phenylisocyanat)], HDI [Hexamethylendiisocyanat, 1,6-Hexylendiisocyanat] und IPDI [Isophorondiisocyanat, 5-Isocyanato-1-isocyanatomethyl-1,3,3-trimethylcyclohexan], beispielsweise die Typen Desmodur^{®} N3600 und XP2410 (jeweils BAYER AG: aliphatische Polyisocyanate, niedrigviskose HDI-Trimerisate). Ebenfalls geeignet ist die oberflächendeaktivierte Dispersion von mikronisiertem, trimerisiertem IPDI BUEJ 339^{®}, jetzt HF9 ^{®} (BAYER AG).

Bevorzugt werden thermische Vernetzer zu 0,1 bis 5 Gew.-%, insbesondere zu 0,2 bis 1 Gew.-%, bezogen auf die Gesamtmenge des zu vernetzenden Polymers, eingesetzt.

Auch eine Vernetzung über Komplexbildner, auch als Chelate bezeichnet, ist möglich. Ein bevorzugter Komplexbildner ist beispielsweise Aluminiumacetylacetonat.

Die hierin beschriebene Haftklebmasse enthält bevorzugt mindestens einen mit dem Poly(meth)acrylat verträglichen Tackifier, der auch als Klebkraftverstärker oder Klebharz bezeichnet werden kann. Unter einem "Tackifier" wird entsprechend dem allgemeinem Fachmannverständnis ein oligomeres oder polymeres Harz verstanden, das die Autohäsion (den Tack, die Eigenklebrigkeit) der Haftklebmasse im Vergleich zu der keinen Tackifier enthaltenden, ansonsten aber identischen Haftklebmasse erhöht. Unter einem "mit dem Poly(meth)acrylat verträglichen Tackifier" wird ein Tackifier verstanden, der die Glasübergangstemperatur des nach gründlichem Mischen von Poly(meth)acrylat und Tackifier erhaltenen Systems im Vergleich zum reinen Poly(meth)acrylat verändert, wobei auch der Mischung aus Poly(meth)acrylat und Tackifier nur eine Tg zugeordnet werden kann. Ein nicht mit dem Poly(meth)acrylat verträglicher Tackifier würde in dem nach gründlichem Mischen von Poly(meth)acrylat und Tackifier erhaltenen System zu zwei Tg führen, von denen eine dem Poly(meth)acrylat und die andere den Harz-Domänen zuzuordnen wäre. Die Bestimmung der Tg erfolgt in diesem Zusammenhang kalorimetrisch mittels DSC (differential scanning calorimetry).

Der mit dem Poly(meth)acrylat verträgliche Tackifier weist bevorzugt einen DACP-Wert von weniger als 0 °C, sehr bevorzugt von höchstens - 20 °C, und/oder bevorzugt einen MMAP-Wert von weniger als 40 °C, sehr bevorzugt von höchstens 20 °C, auf. Zur Bestimmung von DACP- und MMAP-Werten wird auf C. Donker, PSTC Annual Technical Seminar, Proceedings, S. 149-164, Mai 2001 verwiesen.

Besonders bevorzugt ist der mit dem Poly(meth)acrylat verträgliche Tackifier ein Terpenphenolharz oder ein Kolophoniumderivat, insbesondere ein Terpenphenolharz. Die hierin beschriebene Haftklebmasse kann auch Mischungen mehrerer Tackifier enthalten. Unter den Kolophoniumderivaten sind Kolophoniumester bevorzugt.

Bevorzugt enthält eine Haftklebmasse wie hierin beschrieben mit dem Poly(meth)acrylat verträgliche Tackifier zu insgesamt 7 bis 25 Gew.-%, besonders bevorzugt zu insgesamt 12 bis 20 Gew.-%, jeweils bezogen auf das Gesamtgewicht der Haftklebmasse.

Je nach Anwendungsgebiet und gewünschten Eigenschaften der beschriebenen Haftklebmasse kann diese weitere Komponenten und/oder Additive enthalten, und zwar jeweils allein oder in Kombination mit einem oder mehreren anderen Additiven oder Komponenten.

So kann die hierin beschriebene Haftklebmasse beispielsweise Pulver- und granulatförmige, insbesondere auch abrasive und verstärkende, Füllstoffe, Farbstoffe und Pigmente wie z. B. Titandioxid, Zinkoxide und/oder Ruße, enthalten. Darüber hinaus können verschiedene organische Füllstoffe enthalten sein.

Die Dichte der viskoelastischen Polymermasse beträgt bevorzugt 1,05 bis 1,3 g/cm³, besonders bevorzugt 1,10 bis 1,25 g/cm³, gemessen bei 25 Grad Celsius.

Wie zuvor beschrieben wird erfindungsgemäß zunächst eine viskoelastische Polymermasse bereitgestellt (Schritt a)) und kontinuierlich in eine schlauchförmige Schutzpolymerfolie gefüllt (Schritt b)) bevor der so erhaltene strangförmige Polymerverbund abgeflacht (Schritt c)) und anschließend gekühlt wird (Schritt d)). Für das Aufwickeln des abgeflachten strangförmigen Polymerverbunds auf eine Spule (Schritt e)) kann eine beliebige Spule verwendet werden, die geeignet ist, einen entsprechend langen, strangförmigen Polymerverbund aufzunehmen.

Durch das Aufwickeln des strangförmigen Polymerverbundes auf eine Spule wird gewährleistet, dass ausreichend große Mengen viskoelastischer Polymermasse transport- und lagerfähig vorgehalten werden können.

In einer bevorzugten Ausgestaltung der vorliegenden Erfindung wird das hierin beschriebene Verfahren kontinuierlich durchgeführt. Das bedeutet, dass die Schritte a) bis e) derart durchgeführt werden, dass der Polymerverbund nach Schritt d), d.h. nach dem Abkühlen, direkt auf eine Spule aufgewickelt wird. Hierzu kann ein Ende des strangförmigen Polymerverbunds zunächst durch eine Öffnung in der Stirnseite der Spule geführt und dort fixiert werden, bevor der eigentliche Aufwickel-Vorgang beginnt. Sobald eine ausreichende Länge des strangförmigen Polymerverbundes (das heißt wenigstens 30 m, bevorzugt 50 m oder mehr, besonders bevorzugt 100 m oder mehr) auf die Spule aufgewickelt wurde, wird das Ende des strangförmigen Polymerverbundes verschlossen und bei Bedarf auf der Spule fixiert. Zum Verschließen des strangförmigen Polymerverbunds kann das Schutzpolymer an seinem Ende beispielsweise verklebt oder verschweißt werden, beispielsweise durch abschnittsweises Erhitzen des Schutzpolymers und anschließendes Aneinanderpressen, wie dies bei einem Heißsiegelverfahren bekannt ist.

Die so hergestellte viskoelastische Polymermasse ist Gegenstand der vorliegenden Erfindung und eignet sich zur Verwendung und weiteren Verarbeitung unter Einfluss von Wärme und Scherung.

Mit der vorliegenden Erfindung wird also ein Verfahren bereitgestellt, mit dem große Mengen fertiger Polymermasse ortsunabhängig gelagert, transportiert und weiter verarbeitet werden können. Hierzu kann die verpackte viskoelastische Polymermasse beispielsweise von der Spule abgewickelt und kontinuierlich in einen Extruder eingeführt werden. In diesem Extruder wird die verpackte viskoelastische Polymermasse sodann unter Einfluss von Wärme und Scherung plastifiziert und bevorzugt aufgeschmolzen, sodass das Schutzpolymer idealerweise homogen in der viskoelastischen Polymermasse verteilt vorliegt. Anschließend kann eine Portionierung und/oder Formung der erhaltenen Mischung aus viskoelastischer Polymermasse und Schutzpolymer erfolgen, oder die Mischung aus viskoelastischer Polymermasse und Schutzpolymer wird mit weiteren Additiven versetzt.

Die hierin beschriebenen Mengen-, Größen- und weiteren Maßangaben, beispielsweise die Menge des Schutzpolymeranteils und die Dimensionen des abgeflachten strangförmigen Polymerverbunds erlauben eine einfache Bereitstellung großer Mengen transport- und lagerfähig verpackter viskoelastischer Polymermasse, wobei das Verfahren bei verringertem Zeitaufwand bewältigt werden kann und ein Verkleben und Verblocken von Einzelpackungen vermieden wird. Gleichzeitig wird die weitere Verarbeitung der verpackten viskoelastischen Polymermasse unter Einfluss von Wärme und Scherung in ein Zwischen- oder Endprodukt gewährleistet. Vorteilhafterweise wird die viskoelastische Polymermasse für die weitere Verarbeitung gemeinsam mit dem Schutzpolymer in einem Extruder unter Einfluss von Wärme und Scherung behandelt.

Es hat sich gezeigt, dass das kontinuierliche Abfüllen der viskoelastischen Polymermasse in eine Schutzpolymerfolie wie hierin beschrieben einen stabilen strangförmigen Polymerverbund liefert, der über Temperaturbereiche von -30 °C bis +60 °C lagerfähig ist, ohne dass es zu einem Austreten der viskoelastischen Polymermasse kommt. Hierdurch unterscheidet sich die erfindungsgemäße verpackte viskoelastische Polymermasse von kissenförmig verpackter Ware, bei der es immer wieder zu einem ungewollten Öffnen der einzelnen Päckchen kommt. Darüber hinaus wird durch den Einsatz des Schutzpolymers in den hierin beschriebenen Mengen gewährleistet, dass das Schutzpolymer bei der weiteren Verarbeitung unter Einfluss von Wärme und Scherung aufschmilzt und sich homogen in der viskoelastischen Polymermasse verteilen kann.

## Patentansprüche

1. Verfahren zur Herstellung einer verpackten viskoelastischen Polymermasse, umfassend die Schritte:
a) Bereitstellen und Plastifizieren einer viskoelastischen Polymermasse bei erhöhten Temperaturen, wobei die Polymermasse eine Polymermasse auf Basis von Poly(meth)acrylaten mit einem gewichtsmittleren Molekulargewicht von 500.000 g/mol oder mehr ist;
b) kontinuierliches Abfüllen der plastifizierten viskoelastischen Polymermasse in eine Schutzpolymerfolie, die keine selbstklebenden Eigenschaften aufweist und die vor Befüllen mit der viskoelastischen Polymermasse in eine Schlauchform gebracht wurde, unter Erhalt eines strangförmigen Polymerverbunds mit einem Durchmesser von 55 bis 70 mm umfassend einen Kern aus der plastifizierten viskoelastischen Polymermasse und eine Hülle aus der Schutzpolymerfolie, wobei der Anteil der Schutzpolymerfolie bezogen auf das Gesamtgewicht aus Schutzpolymerfolie und viskoelastischer Polymermasse weniger als 1,0 Gew.-% beträgt, und wobei die plastifizierte viskoelastische Polymermasse zum Zeitpunkt des Abfüllens in die schlauchförmige Schutzpolymerfolie eine Viskosität von mehr als 100 Pas aufweist;
c) Überführen des strangförmigen Polymerverbunds in einen abgeflachten strangförmigen Polymerverbund, dessen kleinster Querschnitt ein Verhältnis von Breite zu Höhe von etwa 2:1 bis 7:1 aufweist;
d) Abkühlen des abgeflachten strangförmigen Polymerverbundes auf eine Temperatur, bei der der Polymerverbund weiterhin plastisch verformbar ist;
e) und anschließendes Aufwickeln des abgeflachten strangförmigen Polymerverbundes auf eine Spule, wobei der auf der Spule aufgewickelte strangförmige Polymerverbund eine Länge von mehr als 30 Metern.

2. Verfahren nach Anspruch 1, wobei das Überführen des strangförmigen Polymerverbunds in den abgeflachten strangförmigen Polymerverbund gemäß Schritt c) mittels Walzen durchgeführt wird.

3. Verfahren nach einem der vorhergehenden Ansprüche, wobei das Abkühlen in Schritt d) bis auf eine Kerntemperatur von weniger als 100 °C durchgeführt wird.

4. Verfahren nach einem der vorhergehenden Ansprüche, wobei der strangförmige Polymerverbund in Schritt e) zunächst durch eine Öffnung in der Stirnseite der Spule geführt und dort fixiert wird.

5. Verfahren nach einem der vorhergehenden Ansprüche, wobei Schritt d) in einem Wasserbad erfolgt.

6. Verfahren nach einem der vorhergehenden Ansprüche, wobei das Plastifizieren in Schritt a) in einem Extruder durchgeführt wird.

7. Verfahren nach einem der vorhergehenden Ansprüche, wobei die plastifizierte viskoelastische Polymermasse zum Zeitpunkt des Abfüllens in die schlauchförmige Schutzpolymerfolie eine Viskosität von mehr als 250 Pas aufweist.

8. Verfahren nach einem der vorhergehenden Ansprüche, wobei in Schritt b) der Anteil der Schutzpolymerfolie bezogen auf das Gesamtgewicht aus Schutzpolymerfolie und viskoelastischer Polymermasse weniger als 0,5 Gew.-% beträgt.

9. Verfahren nach einem der vorhergehenden Ansprüche, wobei die Schutzpolymerfolie aus Polyethylen, Polypropylen, Ethylenvinylacetat oder einem Gemisch hiervon besteht.

10. Verfahren nach einem der vorhergehenden Ansprüche, wobei die viskoelastische Polymermasse eine Selbstklebemasse ist oder in eine Selbstklebemasse überführbar ist.

11. Verfahren nach einem der vorhergehenden Ansprüche, wobei die viskoelastische Polymermasse bei 25 °C eine Dichte von 1,05 bis 1,3 g/cm³ aufweist.

12. Verpackte viskoelastische Polymermasse, erhältlich nach einem Verfahren der Ansprüche 1 bis 11.

13. Verwendung einer verpackten viskoelastischen Polymermasse gemäß Anspruch 12 in einem Verfahren, in dem die verpackte viskoelastische Polymermasse zur weiteren Verarbeitung unter Einfluss von Wärme und Scherung plastifiziert wird.

14. Verwendung gemäß Anspruch 13, wobei die Schutzpolymerfolie bei der Behandlung der verpackten viskoelastischen Polymermasse mit Wärme und Scherung zur weiteren Verarbeitung ebenfalls plastifiziert wird.

15. Verwendung gemäß einem der Ansprüche 13 oder 14, wobei die Behandlung mit Wärme und Scherung in einem Extruder durchgeführt wird.

## Claims

1. Method for producing a packaged viscoelastic polymer substance, comprising the steps of:
a) providing and plastifying a viscoelastic polymer substance at elevated temperatures, the polymer substance being a polymer substance based on poly(meth)acrylates having a weight-average molecular weight of 500 000 g/mol or more;
b) continuously dispensing the plastified viscoelastic polymer substance into a protective polymer film, which has no self-adhesive properties and which before being filled with the viscoelastic polymer substance has been brought into a tubular form, to give a strandlike polymer assembly having a diameter of 55 to 70 mm, comprising a core of the plastified viscoelastic polymer substance and a shell of the protective polymer film, where the fraction of the protective polymer film, based on the total weight of protective polymer film and viscoelastic polymer substance, is less than 1.0 wt%, and where the plastified viscoelastic polymer substance has a viscosity of more than 100 Pas at the instant of being dispensed into the tubular protective polymer film;
c) converting the strandlike polymer assembly into a flattened strandlike polymer assembly whose smallest cross section has a ratio of width to height of about 2:1 to 7:1;
d) cooling the flattened strandlike polymer assembly to a temperature at which the polymer assembly is still plastically deformable;
e) and subsequently winding the flattened strandlike polymer assembly onto a reel, where the strandlike polymer assembly wound onto the reel has a length of more than 30 meters.

2. Method according to Claim 1, wherein the converting of the strandlike polymer assembly into the flattened strandlike polymer assembly in step c) is carried out by means of rolls.

3. Method according to either of the preceding claims, wherein the cooling in step d) is carried out down to a core temperature of less than 100°C.

4. Method according to any of the preceding claims, wherein the strandlike polymer assembly in step e) is first passed through an opening in the end face of the reel and secured there.

5. Method according to any of the preceding claims, wherein step d) takes place in a water bath.

6. Method according to any of the preceding claims, wherein the plastifying in step a) is carried out in an extruder.

7. Method according to any of the preceding claims, wherein the plastified viscoelastic polymer substance has a viscosity of more than 250 Pas at the instant of being dispensed into the tubular protective polymer film.

8. Method according to any of the preceding claims, wherein the fraction of the protective polymer film in step b), based on the total weight of protective polymer film and viscoelastic polymer substance, is less than 0.5 wt%.

9. Method according to any of the preceding claims, wherein the protective polymer film consists of polyethylene, polypropylene, ethylene-vinyl acetate or a mixture thereof.

10. Method according to any of the preceding claims, wherein the viscoelastic polymer substance is a self-adhesive composition or can be converted into a self-adhesive composition.

11. Method according to any of the preceding claims, wherein the viscoelastic polymer substance has a density at 25°C of 1.05 to 1.3 g/cm³.

12. Packaged viscoelastic polymer substance obtainable by a method of Claims 1 to 11.

13. Use of a packaged viscoelastic polymer substance according to Claim 12 in a method in which the packaged viscoelastic polymer substance is processed further by being plastified under the influence of heat and shear.

14. Use according to Claim 13, wherein during the treatment of the packaged viscoelastic polymer substance with heat and shear for further processing, the protective polymer film is likewise plastified.

15. Use according to either of Claims 13 and 14, wherein the treatment with heat and shear is carried out in an extruder.

## Revendications

1. Procédé de fabrication d'une masse polymère viscoélastique emballée, comprenant les étapes :
a) fourniture et plastification d'une masse polymère viscoélastique à des températures élevées, la masse polymère étant une masse polymère à base de poly(méth)acrylates ayant une masse moléculaire moyenne en masse de 500 000 g/mol ou plus ;
b) remplissage continu, par la masse polymère viscoélastique plastifiée, d'une feuille polymère protectrice, qui ne présente pas de propriétés autocollantes et qui, avant introduction de la masse polymère viscoélastique, a été mise sous une forme tubulaire, avec obtention d'un composite polymère en forme de boudin ayant un diamètre de 55 à 70 mm, comprenant un cœur en la masse polymère viscoélastique plastifiée et une gaine en la feuille polymère protectrice, la proportion de la feuille polymère protectrice, rapportée au poids total de la feuille polymère protectrice et de la masse polymère viscoélastique, étant inférieure à 1,0 % en poids, et la masse polymère viscoélastique plastifiée présentant, au moment du remplissage de la feuille polymère protectrice tubulaire, une viscosité supérieure à 100 Pa•s ;
c) conversion du composite polymère en forme de boudin en un composite polymère en forme de boudin aplati, dont la section transversale la plus petite présente un rapport largeur/hauteur d'environ 2:1 à 7:1 ;
d) refroidissement du composite polymère en forme de boudin aplati à une température à laquelle le composite polymère peut en outre subir une déformation plastique ;
e) et ensuite enroulement du composite polymère en forme de boudin aplati sur une bobine, le composite polymère en forme de boudin enroulé sur la bobine ayant une longueur supérieure à 30 mètres.

2. Procédé selon la revendication 1, dans lequel la conversion du composite polymère en forme de boudin en le composite polymère en forme de boudin aplati selon l'étape c) est mise en œuvre à l'aide de rouleaux.

3. Procédé selon l'une des revendications précédentes, dans lequel le refroidissement de l'étape d) est mis en œuvre jusqu'à une température du cœur inférieure à 100 °C.

4. Procédé selon l'une des revendications précédentes, dans lequel le composite polymère en forme de boudin est, dans l'étape e), d'abord guidé à travers une ouverture dans la face frontale de la bobine, puis y est fixé.

5. Procédé selon l'une des revendications précédentes, dans lequel l'étape d) a lieu dans un bain marie.

6. Procédé selon l'une des revendications précédentes, dans lequel la plastification de l'étape a) est mise en œuvre dans une extrudeuse.

7. Procédé selon l'une des revendications précédentes, dans lequel la masse polymère viscoélastique plastifiée présente, au moment du remplissage de la feuille polymère protectrice tubulaire, une viscosité supérieure à 250 Pa•s.

8. Procédé selon l'une des revendications précédentes, dans lequel dans l'étape b) la proportion de la feuille polymère protectrice, rapportée au poids total de la feuille polymère protectrice et de la masse polymère viscoélastique, est inférieure à 0,5 % en poids.

9. Procédé selon l'une des revendications précédentes, dans lequel la feuille polymère protectrice est constituée de polyéthylène, de polypropylène, d'éthylène-acétate de vinyle ou d'un mélange de ceux-ci.

10. Procédé selon l'une des revendications précédentes, dans lequel la masse polymère viscoélastique est une masse autocollante ou peut être convertie en une masse autocollante.

11. Procédé selon l'une des revendications précédentes, dans lequel la masse polymère viscoélastique présente à 25 °C une masse volumique de 1,05 à 1,3 g/cm³.

12. Masse polymère viscoélastique emballée pouvant être obtenue par un procédé selon les revendications 1 à 11.

13. Utilisation d'une masse polymère viscoélastique emballée selon la revendication 12 dans un procédé dans lequel la masse polymère viscoélastique emballée est, pour un traitement ultérieur, plastifiée sous l'influence de la chaleur et d'un cisaillement.

14. Utilisation selon la revendication 13, dans laquelle la feuille polymère protectrice est, lors du traitement de la masse polymère viscoélastique emballée, elle aussi plastifiée avec de la chaleur et un cisaillement pour traitement ultérieur.

15. Utilisation selon l'une des revendications 13 ou 14, le traitement avec de la chaleur et un cisaillement étant mis en œuvre dans une extrudeuse.
